# EUROPEAN PATENT APPLICATION

(11) **EP 4 624 202 A1**
(43) Date of publication of application: **01.10.2025**
(21) Application number: 25165693.0
(22) Date of filing: 24.03.2025
(51) Int. Cl.: B60G 3/18, B60G 7/00, B60G 7/02, B62K 25/00, B62K 25/28

(54) **SUSPENSION FOR VEHICLES WITH ONE OR MORE WHEELS, VEHICLE COMPRISING THIS SUSPENSION AND METHOD FOR MAKING THIS SUSPENSION**

(30) Priority: 25.03.2024 IT 202400006571
(71) Applicant: Ciampelli, Enrico, 50068 Rufina (IT)
(72) Inventor: Ciampelli, Enrico, 50068 Rufina (IT)
(74) Representative: Pizzoli, Antonio Mario

(57) **Abstract**

Suspension for vehicles, which comprises a swingarm (1) configured to rotatably support a wheel (8) and to be mechanically connected, in a movable manner, to one or more portions of a frame (2) of a vehicle by means of intermediate elements (3, 4) configured to rotate or flex with respect to the swingarm (1) and the frame (2), so that the swingarm (1), the frame (2) and the intermediate elements (3, 4) form an articulated quadrilateral configured to rotate or flex around at least four rotation axes (A1, A2, A3, A4) substantially parallel to each other, wherein a first intermediate element (4) of said intermediate elements (3, 4) comprises a control arm (4) which is pivoted to the swingarm (1) to rotate around the first rotation axis (A1) of said four rotation axes (A1, A2, A3, A4) and is configured to be pivoted or fixed to the frame (2) to rotate or flex around the fourth rotation axis (A4) of said four rotation axes (A1, A2, A3, A4), wherein a second intermediate element (3) of said intermediate elements (3, 4) comprises an eccentric pin (3) which is pivoted to the swingarm (1) to rotate around a second rotation axis (A2) of said four rotation axes (A1, A2, A3, A4) and is configured to be pivoted to the frame (2) to rotate around a third rotation axis (A3) of said four rotation axes (A1, A2, A3, A4). The present description also relates to a vehicle comprising this suspension and a method for making this suspension.

## Description

### Technical field

The present description relates to a suspension for vehicles with one or more wheels, in particular a suspension that can be used as the rear suspension of a cycle, for example a bicycle, a motorcycle, a tricycle or a quad. The present description also relates to a vehicle comprising this suspension and a method for making this suspension.

### Background of the description

The known art includes cycles with one or more rear wheels connected to a frame by means of a rear suspension provided with a swingarm which can be single or double, symmetrical or asymmetrical, anchored internally or externally to the frame, or anchored directly to the engine in the case of motorcycles with a load-bearing engine, i.e. an engine which is configured with support elements to also act as a frame for the rear suspension.

In the prior art, high-performance motorcycles employ swing-arm rear suspensions, in which the engine transfers the driving torque via a transmission from a drive wheel, in particular a pinion, to a driven wheel, in particular a crown gear integral with the rear wheel. The swingarm of these prior art motorcycles may be pivoted to the frame to rotate around a horizontal rotation axis that is arranged behind the rotation axis of the pinion in the direction of travel of the motorcycle. In this case, the rotation axis of the swingarm passes through the area delimited by the chain.

This suspension is simple and economical, structurally rigid and robust in relation to its weight and offers a substantially valid kinematics. Other advantages are the limited number of components and the ease in disassembling and reassembling the rear wheel. Furthermore, it is aesthetically pleasing.

Similar suspensions are also used in bicycles and quads of the known type, as well as in vehicles with three or more wheels that lean when cornering, also known as Leaning Multi Wheel.

However, this known suspension also has some weak points related to the dynamic behaviour of the motorcycle under the effect of the tractive force of the chain, which is by far the greatest force to which the swingarm is subjected, and therefore also strongly affects its structural dimensioning. This same force also significantly affects the dynamics of the suspension, both in acceleration and release, creating reaction forces in compression and extension of the suspension as a function of the acceleration imparted to the wheel, the torque discharged to the ground, the inclination of the swingarm and other parameters of the motorcycle.

When accelerating, every motorcycle transfers part of the load from the front wheel to the rear wheel, whose suspension reacts to the increase in load by compressing, with a phenomenon called squat.

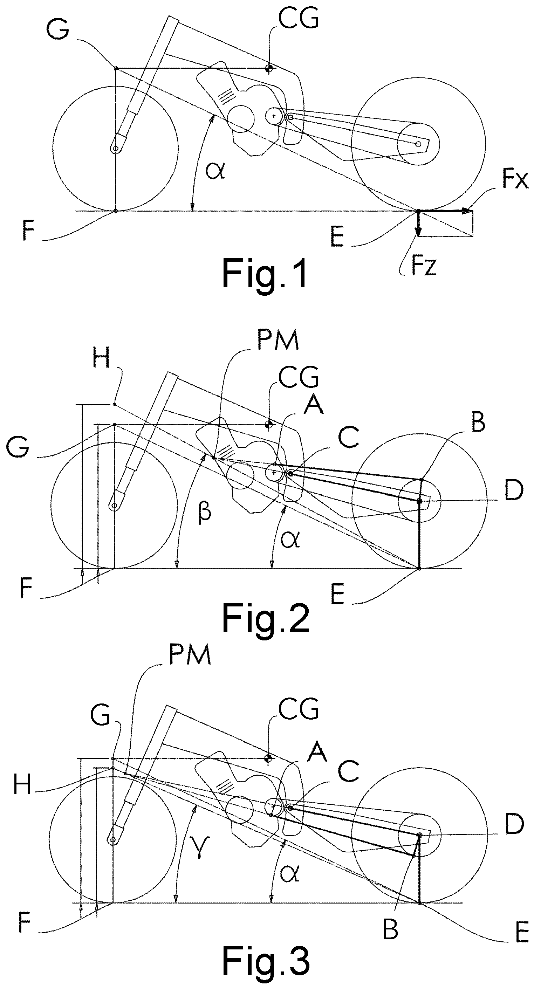

In general, with reference to figure 1, at the point of tangency of a wheel with the ground, the contact force Fz is defined as the force perpendicular to the ground itself and the tractive force Fx is defined as the force coplanar to the ground. For simplicity, the effects resulting from the deformation of the tire will be neglected in the present description. In the present description, the centre of gravity refers to the motorcycle with the driver on board.

In the absence of external forces, the sum of the tire contact forces on the ground is equal to the weight of the motorcycle. When the motorcycle accelerates or decelerates, if the load on one of the two wheels increases, the load on the other wheel decreases, and vice versa. This phenomenon, known as load transfer, is directly proportional to the level of the motorcycle's centre of gravity from the ground and inversely proportional to the wheelbase.

The motorcycle exhibits the same dynamic behaviour even in the release phase, that is, when the rear wheel pushes the engine into rotation, overcoming its natural braking action. In this case, the forces acting on the motorcycle are of opposite sign, so that the contact force on the ground is transferred from the rear wheel to the front wheel.

However, during acceleration there are more forces acting on the suspension, making it more difficult to predict whether the suspension will raise or lower.

Since the load transfer during acceleration tends to compress the suspension, the latter is generally designed to resist the compression with some intensity. In this context, the tractive force of the chain plays a decisive role.

In general, anti-squat, anti-rise, and braking anti-rise are three values that define the behaviour of cycle suspensions. In acceleration, the known suspension can be effectively represented as in figure 2 by a planar mechanism with four articulated arms lying on the vertical and longitudinal plane of the vehicle. The fixed arm AC of this articulated quadrilateral is the segment that connects the rotation axis of the swingarm with the point at which the chain becomes tangent to the pinion, the first connecting arm AB of the articulated quadrilateral is the upper section of the chain, which connects the point of tangency of the chain to the pinion with the point of tangency of the chain to the crown gear, the second connecting arm CD is the segment that lies on the longitudinal axis of the swingarm and connects the rotation axis of the swingarm with the rotation axis of the rear wheel, while the movable arm of the articulated quadrilateral is the segment BD that connects the rotation axis of the rear wheel with the point of tangency of the upper section of the chain to the crown gear. The segment DE that connects the rotation axis of the rear wheel with the point of contact of the rear wheel with the ground moves integrally with the segment BD. In a suspension of this type, during the travel each point integral with the segment BD rotates around a centre of instantaneous rotation located at the intersection of the extensions of the two connecting arms AB and CD. This centre of instantaneous rotation is commonly called the pole of momenta PM in the motorcycle field.

In release, the known suspension is instead represented by figure 3, in which the taut section of the chain is the lower one. In this case, the pole of momenta PM assumes a different position than the previous one. When braking with the rear brake, the chain has no active role in the dynamics of the suspension and the pole of momenta PM is located at the fulcrum of the swingarm on the frame as in figure 3.

During the travel of the suspension, the instantaneous movement direction of the contact point between the rear wheel and the ground is always orthogonal to the axis connecting the contact point of the rear wheel to the pole of momenta. The inclination of this axis determines the tendency of the suspension to extend as a function of the tractive force applied to the contact point of the rear wheel. In acceleration, this tendency is commonly represented by the so-called anti-squat value.

The tendency of the suspension to compress under acceleration due to the load transfer is directly proportional to the product of the tractive force and the level of the centre of gravity from the ground, while it is inversely proportional to the wheelbase of the motorcycle.

The tendency of the suspension to extend, known as the anti-squat effect, is directly proportional to the height of the point where the vertical line at the contact point of the front wheel intersects the axis passing through the contact point of the rear wheel and the pole of momenta, also called the anti-squat axis, while it is inversely proportional to the wheelbase of the motorcycle.

In motorcycle design practice, the anti-squat value is expressed as the percentage ratio between the height from the ground of the point where the axis joining the contact point of the rear wheel with the pole of momenta intersects the vertical line passing through the contact point between the ground and the front wheel, and the level from the ground of the centre of gravity of the motorcycle.

The anti-squat value is equal to 100% if the two levels coincide, in which case the suspension does not tend to compress or extend as the tractive force varies. In this situation, the pole of momenta of the acceleration coincides with the load transfer line.

A load transfer occurs with every change in tractive force, regardless of whether the suspension compresses or extends, but the anti-squat value defines the corresponding change of the ground contact force and therefore of the grip of the motorcycle.

If the anti-squat value is less than 100%, following an increase in tractive force the suspension compresses to its new equilibrium level before the load transfer produces an increase in contact force. Therefore, in this case, the grip required for acceleration is produced with a certain delay with respect to the application of tractive force, so a sudden application of tractive force easily causes the tire to slip.

If the anti-squat value is equal to 100%, the tractive force instantly produces the increase in contact force and therefore also the necessary grip.

If the anti-squat value is greater than 100%, the increase in tractive force produces an increase in contact force, and therefore grip, which is greater than that which would be obtained with load transfer alone. This effect is a dynamic load that is very important for accelerating with the motorcycle leaning sideways, because it gives the rear wheel instant additional grip.

During deceleration, the motorcycle exerts an engine brake, and the tractive force becomes negative, so the taut section of the chain is the lower one. In this situation the pole of momenta and the relevant anti-rise axis change.

If the suspension tends to maintain its level unchanged when a negative tractive force is applied in release, then its anti-rise value is equal to 100%. As in the case of anti-squat, also for the anti-rise value this condition requires the coincidence of the pole of momenta with the load transfer line. If the suspension tends to extend, the anti-rise value is less than 100%, while it is greater than 100% if the suspension tends to compress.

When the motorcycle is heavily inclined laterally and the tractive force changes sign, an immediate load transfer occurs on the front wheel, with a consequent lightening of the rear wheel. In this phase it is important that the motorcycle's anti-rise value is less than 100% to prevent the suspension from opposing the extension, with the consequence that the rear wheel would lighten and lose grip.

The situation is different if the motorcycle deceleration is caused by the action of the rear brake and not the engine brake, since the rear brake tends to make the rear wheel and the swingarm integral, thus causing an anti-rise effect under braking, which is a parameter that defines the response of the rear suspension to braking. In motorcycle racing, braking in a straight line always occurs at the limit of the motorcycle overturning and the rear suspension is in any case fully extended, so the anti-rise value under braking has a modest influence compared to that of the anti-squat but acquires greater importance in the terminal phase of braking, which occurs when the motorcycle is very tilted laterally, and also in some short transitory phases, controlling the tendency of the entire motorcycle to pitch.

In known suspensions, the three values of anti-squat, anti-rise and braking anti-rise vary during the suspension travel, so there is a need to keep these parameters as constant as possible in different driving situations.

In particular, the variation of the anti-squat value during the suspension oscillation depends on a plurality of parameters, among which the most influential parameter is the length of the swingarm, since increasing its length reduces the variation of the anti-squat value. Since the ability of the motorcycle to get the engine power to the ground is crucial in the sports field, the swingarm is lengthened to the maximum to obtain an anti-squat value that is as constant as possible along the entire oscillation of the suspension, so that the rear suspension has, during the acceleration of the motorcycle, a behaviour that is as neutral as possible and also more predictable for the driver. Furthermore, the anti-squat value is generally set close to 100% in a neutral position of the suspension, in particular around half of the maximum travel, to obtain a good overall compromise in the suspension performance.

However, to achieve a constant anti-squat value throughout the entire suspension travel during acceleration, the swingarm's rotation axis and consequently the chain pinion should be located far forward on high-performance motorcycles, in an area that is generally impractical, since it is occupied by the engine.

Suspensions with the coaxial positioning of the pinion and the rotation axis of the swingarm have been proposed with the aim of obtaining simultaneously a constant play of the chain and an elongation of the swingarm. These known suspensions involve various structural and practical problems and, in any case, do not allow obtaining a constant value of anti-squat along the entire travel, for which they have long been abandoned.

To lengthen the swingarm, it is necessary to reduce the longitudinal bulk of the engine and gearbox assembly, by bringing the axes of the latter closer together and then overlapping them as much as possible. However, even significant lengthening of the swingarm results in very modest improvements in the linearity of the anti-squat value, in view of significant increases in unsprung masses and serious compromises in the general architecture of the motorcycle, with the result that the improvement in overall suspension performance is modest.

Other known suspensions comprise quadrilateral schemes where the single swingarm is replaced by two swingarms that bring the rotation axis of the suspension at the rotation axis of the pinion. These suspensions therefore achieve kinematics equivalent to that with a single swingarm rotation axis coinciding with the pinion rotation axis, but with high complexity, weight and costs. Since it is essentially impossible to arrange the swingarm rotation axis in front of the pinion, all high-performance motorcycles with chain-driven swingarm rear suspension have a characteristic anti-squat graph as a function of the suspension travel, which decreases as the suspension is compressed. To adapt the motorcycle to the rider's preferences and/or road characteristics, only the level of the swingarm rotation axis on the frame can be changed, resulting in uniformly increasing or decreasing the anti-squat value over the entire suspension travel.

With the motorcycle leaning sideways in a curve and the suspension compressed by centrifugal force, raising the swingarm's rotation axis increases the anti-squat value, thus improving traction in the initial moments of acceleration. However, with anti-squat values much greater than 100%, the dynamic increase in contact force has the trade-off of forcing the suspension to extend only if the longitudinal grip of the tire remains constant. In the event of a significant reduction in grip due to external causes (change in asphalt, dirt, depressions, etc.), resulting in wheel slippage, the driving force is reduced and with it also the extension force of the suspension. In this case, the contact force and grip are reduced, in turn amplifying the reduction in grip that initiated the reaction. If the traction is controlled by an electronic traction control system, this system may intervene by abruptly reducing power, so that the rear wheel regains traction, and the control system increases power delivery again until the wheel spins again. The result of this electronic intervention is a jerky acceleration and a noticeable pumping of the suspension.

To accelerate a motorcycle that is very leaned over, it is reasonable to have an anti-squat value close to 100%, which allows to avoid the aforementioned problems and at the same time have a substantially instantaneous load transfer to the drive wheel, i.e. the rear wheel. In this position, the typical swingarm suspension has an anti-squat value that is generally much less than 100%.

When the motorcycle is slightly tilted laterally, the suspension is not compressed by centrifugal force and is closer to its end of extension travel. In this case, maximum acceleration no longer depends on the grip of the tire but depends on the lifting of the front wheel from the ground, which can only be avoided by reducing the tractive force and therefore acceleration, or by lowering the centre of gravity.

For these reasons, once the maximum extension limit of the swingarm has been reached, the variation in the anti-squat value that is still present and cannot be eliminated is compensated by means of progressive linkages connecting the swingarm and the spring-shock absorber unit. In other words, the suspension is configured in such a way as to obtain a spring calibration at the wheel that increases with the compression (rising-rate). In this way, better control of the suspension's work level is obtained during acceleration. However, this known suspension becomes progressively harder towards the end of the compression travel, which is a disadvantageous characteristic in the phase of travel at the maximum lateral inclination angle and at constant speed, especially considering that the absorption capacity of this suspension is seriously compromised by the fact that it works at an inclination of the motorcycle from the vertical that reaches around 60 degrees.

Furthermore, a progressive spring calibration to compensate for a non-constant anti-squat value in turn implies serious compromises in the calibration of the shock absorber. The action of a suspension composed of a spring and a shock absorber is commonly defined as a function of the motion it performs in returning to the initial position after having undergone a perturbation.

Sub-critical damping occurs when a suspension makes one or more oscillations around its initial height before stabilizing. By increasing the hydraulic damping, the critical damping situation occurs, which is when the suspension returns to its initial height without oscillations. Any further increase in the damping of the shock absorber brings the suspension to hypercritical damping. This last configuration is commonly avoided both in competition and on the road, since it does not bring any advantage in terms of performance or comfort.

The typical suspension of sport motorcycles is configured to work with a slightly sub-critical damping. In track competitions the general tendency is undoubtedly to use suspensions with a constant behaviour along the stroke both in terms of spring stiffness and damping characteristic. However, with a traditional swingarm suspension, this configuration is not possible since the rising-rate effect, which is always present, also involves an alteration of the damping characteristic. Generally, these suspensions have a definitely sub-critical damping near the end of the extension stroke and during compression it gradually goes towards the critical value. In other words, the suspension has a hydraulic damping of the shock absorber that tends to be too low towards the end of the extension stroke and too high towards the end of the compression stroke.

It is therefore desirable to have a suspension in which the spring constant of the spring can be the same throughout the travel, so that the damping characteristic of the suspension can also be constant throughout the travel.

Another typical problem of the aforementioned known suspensions is the value of the pinion-crown gear distance, also called chain distance, which decreases exponentially as the suspension extends, with differences even greater than 1 mm between the minimum and maximum, despite the adoption of relatively long swingarms.

In a motorcycle's extreme braking situation, the rear suspension always works in the fully extended position and in this phase a high chain slack makes the transmission of torque from the wheel to the engine less linear and predictable, so minimizing chain slack even in the fully extended position can help reduce braking bounce, as well as reducing the risk of chain derailment.

### Summary of the description

The object of the present description is therefore to provide a suspension free from such problems. This object is achieved with a suspension and a method, the main characteristics of which are specified in the attached claims, to be considered an integral part of the present description.

In particular, the suspension according to the present description, thanks to its particular structure, allows to keep the anti-squat value of a motorcycle constant during the suspension travel, avoiding the lengthening of the swingarm and the consequent increase of the chain wheelbase and of the unsprung masses. In other words, the suspension behaves in such a way as to leave almost perfectly unchanged a desired anti-squat value, which is set during the design phase of the suspension itself.

Conceptually, the suspension scheme consists of altering the kinematics of the swingarm of the known suspension. The aim is to have the wheel axis move during the suspension travel as if it were supported by a swingarm much longer than the one physically realisable on the motorcycle. The proposed suspension can still be effectively summarised with the four-arm planar mechanisms of figure 2 and figure 3 but the kinematics of point D, i.e. the wheel axis, is defined by a second four-arm articulated planar mechanism connecting the suspension swingarm to the frame. The suspension may include a mechanism that allows the anti-squat value to be varied easily and quickly according to the current needs or the preferences of the rider.

The suspension allows to reduce the variation of the chain wheelbase along the travel to a value of around a third of that typical of the known suspension. Consequently, the slackening of the chain and its hopping are considerably reduced, thus simplifying the passage inside the cavities of the swingarm and making the transmission of the torque from the pinion to the wheel more direct and precise. This last feature also allows to improve the precision of the intervention of any electronic traction control systems and/or of the engine brake, given the need to modulate the torque to the wheel with the fastest possible reaction times.

This suspension also reduces the interference of the chain with the end of the swingarm that faces the frame, since when the suspension compresses there is also a small upward movement of the swingarm's rotation axis relative to the eccentric pin. This upward movement keeps the play between the swingarm and the lower section of the chain high, while the opposite occurs during suspension extension.

Another advantage of this suspension is the reduction of the chain length, as it is no longer necessary to advance the position of the pinion to the maximum in search of favourable anti-squat values.

Furthermore, the spring rate of this suspension can be configured with a linear logic, so that the damping characteristic of the elastic means comprising the spring and shock absorber can be constant throughout the entire suspension travel.

Moreover, this suspension integrates very well into a sports motorcycle, to the point of being essentially indistinguishable from the same motorcycle with a traditional suspension. From a construction point of view, given the technical advantages that are obtained, the costs of producing this suspension are not much higher than the costs of a traditional suspension, since only two additional elements are needed, namely the control arm and the swinging pin, in addition to some rolling bearings. Furthermore, this suspension also allows the complete elimination of the kinematics that connects the shock absorber to the swingarm, whose main function is to make the suspension progressive.

### Brief description of the drawings

Further advantages and features of the suspension and method according to the present description will be apparent to those skilled in the art from the following detailed description of some embodiments, to be considered non-limiting examples of the claims, with reference to the attached drawings in which:
- figures 1-4 are schematic side views of a motorcycle with a known suspension;
- figures 5-6 are schematic and partial side views of a motorcycle with a first embodiment of the suspension according to the present description;
- figures 7-12 are schematic side views of the motorcycle of figures 5-6 during various phases of the method according to the present description;
- figures 13-15 are schematic side views of the motorcycle of figures 1-4 in three suspension positions;
- figures 16-18 are schematic side views of the motorcycle of figures 5-6 in three suspension positions;
- figures 19-21 are schematic side views of the motorcycle of figures 1-4 in three additional suspension positions;
- figures 22-24 are schematic side views of the motorcycle of figures 5-6 in three additional suspension positions;
- figure 25 shows a side view of the motorcycle of figures 5-6;
- figure 26 shows the partial and enlarged section XXVI-XXVI of figure 25;
- figure 27 shows the partial and enlarged section XXVII-XXVII of figure 25;
- figure 28 shows a top view of the motorcycle of figures 5-6;
- figure 29 shows the partial and enlarged section XXIX-XXIX of figure 28;
- figures 30-37 show some exploded views of components of the first embodiment of the suspension;
- figure 38 shows a partial and enlarged view of a second embodiment of the suspension.

### Exemplary embodiments

This description has been simplified by applying the following conditions:
1.the vehicle is considered to include a rider;
2.all vehicle suspensions are always compressed to the same level;
3.the centre of gravity is placed halfway along the wheelbase between the front and rear wheels of the vehicle when the suspensions are at their neutral or intermediate level (60 mm in the example given here), so as to have in this position a load distribution of 50% on the front wheels and 50% on the rear wheels;
4.when in motion, the vehicle moves on flat, horizontal ground, without the influence of external forces.

Figure 1 shows a load transfer scheme in an accelerating vehicle, in particular in a motorcycle with a known suspension, wherein the force Fz represents vectorially the load transferred from the front wheel to the rear wheel as a function of the tractive force Fx. The force Fz is equal to the force Fx multiplied by the ratio between the level FG of the centre of gravity CG with respect to the ground and the distance FE between the rear contact point E of the rear wheel with the ground and the front contact point F of the front wheel with the ground, i.e. the wheelbase between the two wheels. Since the ratio FG/FE between the level FG and the distance FE is in turn also equal to the trigonometric tangent of the angle α of the load transfer, another way to calculate the force Fz is to multiply Fx by the tangent of α.

As the motorcycle accelerates, there is a variation in the contact forces of the tires on the ground, since the tractive force Fx is not aligned with the inertia force, which is equal and opposite to the tractive force Fx and which manifests itself in the centre of gravity CG. This pair of forces induces the entire motorcycle to rotate clockwise (in the view of figure 1), with the result that the contact force of the rear wheel increases and the contact force of the front wheel decreases, causing a load transfer that is directly proportional to the level FG of the centre of gravity CG and inversely proportional to the distance FE between the wheels.

The motorcycle displays the same dynamic behaviour also in the release phase, that is, when the rear wheel drives the engine into rotation, overcoming its natural braking action. In this case, the forces in play are of opposite sign, and the contact force is transferred from the rear wheel to the front wheel.

The load transfer during acceleration therefore causes a compression of the rear suspension, which however tends to oppose this compression to a variable extent, so that there is no total independence between the tractive forces and the suspension forces. In this case, the tractive force of the chain, of high intensity, takes on a decisive role.

Figure 2 shows the graphic construction with which the anti-squat value is obtained in the motorcycle of figure 1 during acceleration. In this case the anti-squat value is greater than 100%. The rear suspension is represented by a flat mechanism with four articulated arms in which each joint has a rotation axis that is substantially horizontal and transverse, i.e. substantially parallel to the rotation axis of the rear wheel. During acceleration, the taut section of the chain is the upper section AB, i.e. the free section of the chain between the contact point A of the chain with the engine pinion and the contact point B of the chain with the rear wheel crown gear.

In this four-link planar mechanism, the segment AC between the contact point A of the chain with the pinion and the rotation axis of the swingarm is considered the arm of the articulated quadrilateral that is fixed to the frame or in any case to the suspended mass of the vehicle. The length of this arm varies during the suspension travel since the point A of tangency of the upper section of the chain with the pitch diameter of the pinion varies as the slope of this section of the chain varies. The arm AC is defined as fixed on the frame since, in each of the positions that the suspension can assume, its extreme points A and C are those in which the suspension connects to the frame. The upper section AB of the chain and the distance CD between the rotation axis C of the swingarm and the rotation axis D of the rear wheel are the two connecting arms, while the segment BD between the contact point B of the chain with the crown gear and the rotation axis D of the rear wheel is the movable arm, which has an instantaneous direction of motion around an instantaneous centre of rotation or pole of momenta PM, which is located at the point of intersection of the extensions of the connecting arms AB and CD.

Identifying the position of the pole of momenta PM is useful for describing the motion law of the contact point E of the rear wheel during the suspension travel. The contact point E, initially in contact with the ground, being integral with the segment BD, always moves with an instantaneous direction perpendicular to the radius it has with respect to the pole of momenta PM. This radius represents the connecting element that transmits the tractive force Fx from the rear contact point E to the motorcycle frame, so its inclination with respect to the ground is very important. The anti-squat angle β is the angle between the ground line, i.e. the FE axis that joins the contact points E and F, while the anti-squat axis EH is the axis that passes through the pole of momenta PM and joins the rear contact point E with a point H located on the vertical of the contact point F of the front wheel with the ground. The anti-squat angle β of the motorcycle is important as it determines the tendency of the suspension to extend as a function of the tractive force Fx applied to the rear contact point E. This tendency is the anti-squat value AS.

Therefore, the tendency of the suspension to compress during acceleration due to the load transfer is equal to the tractive force Fx multiplied by the ratio between the level FG of the centre of gravity CG and the distance FE between the contact points of the wheels, i.e. Fx*FG/FE, while the tendency to extend due to the anti-squat value AS is equal to Fx*FH/FE. Simplifying, it is clear that if the distance FH is greater than the distance FG, the suspension will react to the tractive force Fx with an extension, while if the distance FH is less than the distance FG the suspension will react to the tractive force Fx with a compression.

This phenomenon is represented by expressing the distance FH as a percentage of the distance FG, i.e. the anti-squat value AS is AS=FH/FG, so if FH=FG the anti-squat value AS is equal to 100% and in this situation the suspension tends neither towards compression nor extension, regardless of the value of the tractive force Fx.

Other significant cases of the anti-squat AS value are the following:
the anti-squat value AS is equal to zero if the pole of momenta PM is on the axis FE of the ground, so in this case the suspension compresses as a function of the load Fz transferred to the rear wheel,
the anti-squat value AS is negative if the pole of momenta PM is below the axis FE of the ground, so in this case the anti-squat value AS indicates a pro-squat tendency, so that the suspension compresses as a function of a force greater than the load Fz transferred to the rear wheel,
the anti-squat value AS is equal to -100% if the suspension compresses by a force double the force of the load Fz transferred to the rear wheel,
the anti-squat value AS is equal to 200% if the pole of momenta PM is located on the axis joining the rear contact point E and the centre of gravity CG, so that the suspension extends by a force equal and opposite to that of the load Fz transferred to the rear wheel.

Therefore, if the anti-squat value AS is expressed as a percentage, the force to which a spring acting on the rear suspension is subjected can be calculated directly. For example, if a tractive force Fx is applied that produces a load transfer of 100 kg towards the rear wheel and the suspension has an anti-squat value AS of 80%, then the extension force generated by the anti-squat effect is 80 kg and the suspension compresses only by the remaining 20 kg.

The analysis of the load transfer Fz and anti-squat AS values leads to an understanding of the variations in rear wheel grip in response to the tractive force Fx, since the load transfer always occurs, regardless of whether the suspension compresses or extends, but the contact force of the rear wheel and therefore the grip obtained as a consequence is linked, especially in the first moments, to the anti-squat AS value.

When accelerating with an anti-squat value AS less than 100%, before the load transfer produces an increase in the contact force, the suspension must compress until it finds its new equilibrium level. Therefore, in this case, the grip required for acceleration is produced with a certain delay with respect to the application of the tractive force Fx. A sudden application of the tractive force Fx can therefore easily generate a slipping of the wheel on the ground.

If the anti-squat value AS is equal to 100%, the tractive force Fx instantly produces the increase in contact force and therefore the necessary grip, leaving aside the time required for the compression of the tire, which is in all respects the primary form of suspension.

Acceleration with an anti-squat value AS greater than 100% even causes an increase in the contact force, and therefore in the grip of the wheels, which is greater than what would be obtained with the load transfer alone. In this case we speak of dynamic load, which in racing is of the utmost importance when accelerating with the motorcycle heavily tilted, since it gives instant additional grip to the rear wheel.

In addition to the anti-squat value AS, which is very important, there are two other parameters that characterise the functioning of the suspension when released and when braking with the rear brake.

Figure 3 shows the load transfer of the motorcycle in figure 1 in release, in which the anti-rise value AR of the suspension is less than 100%. The anti-rise value AR is calculated as the ratio AR=FH/FG, as for the anti-squat value AS. In this situation, when the motorcycle exerts an engine brake and the tractive force Fx is therefore negative, the suspension still behaves as a flat mechanism with four arms AC, AB, CD and BD, with the difference that in this case in the articulated quadrilateral the taut section AB of the chain is the lower section, not the upper section. In this situation there is a different pole of momenta PM and a different anti-rise axis EH, which is inclined with an anti-rise angle γ.

If the suspension tends to maintain its level unchanged when a negative tractive force Fx is applied, the anti-rise AR value is equal to 100%. As in the case of the anti-squat value AS, also for the anti-rise AR value this condition requires the coincidence of the pole of momenta PM with the load transfer line. If the suspension tends to extend, the anti-rise AR value is less than 100%, while the suspension tends to compress with an anti-rise AR value greater than 100%.

The anti-rise AR value becomes particularly important when, with the motorcycle heavily tilted laterally, the accelerator is closed quickly, inverting the sign of the tractive force Fx. In this situation, the motorcycle immediately transfers part of the load to the front wheel, unloading the rear wheel. During this transition, it is important not to have anti-rise AR values that are too high, since if the suspension opposes the extension, the rear wheel unloads and loses grip on the ground.

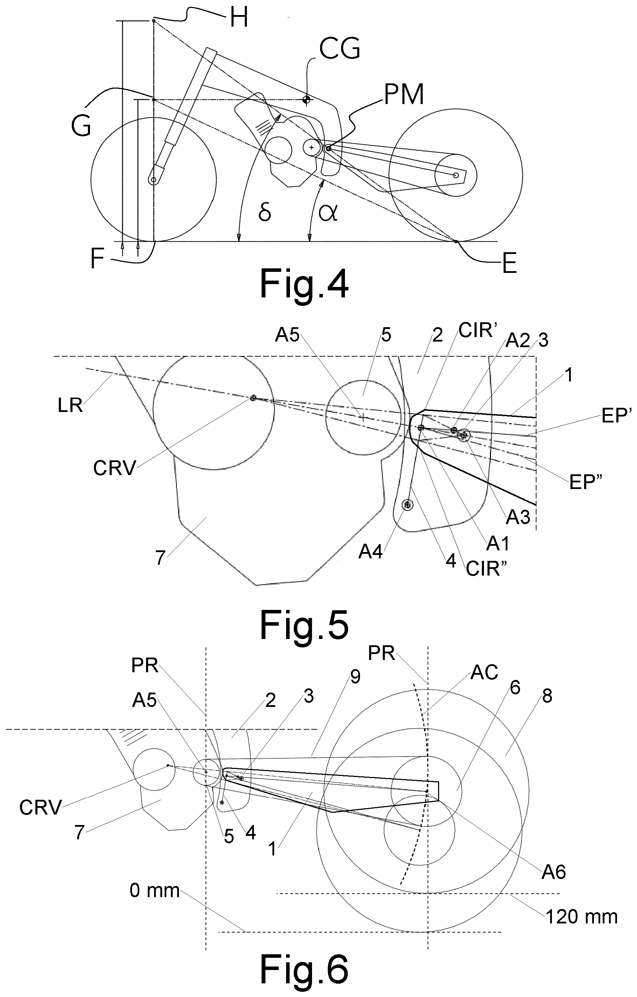

Another important parameter for the functioning of the suspension is the braking anti-rise ARF during braking with the rear brake. Figure 4 shows the motorcycle of figure 1 braking with the rear brake, where the braking anti-rise ARF value of the suspension is greater than 100%. The axis EH is in this case the braking anti-rise axis and the angle formed by the braking anti-rise axis EH with the ground is the braking anti-rise angle δ. In this situation the reaction of the motorcycle follows a logic different from the deceleration due to the release of the accelerator. During braking, the brake tends to make the rear wheel and the swingarm integral, so the pole of momenta PM corresponds to the rotation axis of the swingarm. The braking anti-rise ARF value is obtained, as for the anti-squat and the anti-rise, by direct comparison with the load transfer value.

The value of braking anti-rise ARF defines the suspension response to braking. Since in competitions braking on a straight line always occurs at the limit of the motorcycle overturning, in this phase the rear suspension is fully extended, and this parameter has a modest influence.

The value of braking anti-rise ARF becomes more important in the final phase of braking which occurs with a motorcycle very inclined and also in some short transitory phases, controlling the pitching tendency of the entire motorcycle.

On a typical motorcycle, all three of the above values vary during the suspension travel and the direct consequence is the impossibility of obtaining constant values of anti-squat AS, anti-rise AR and braking anti-rise ARF in every riding situation. In particular, the value of anti-squat AS typically assumes a maximum value at level 0, i.e. at the maximum extension of the suspension, and a minimum value at level 120, i.e. at the maximum compression of the compression, so during the compression of the suspension the value of anti-squat AS is significantly reduced in a known suspension. Typical values of anti-squat AS are in the order of 110-130% at level 0 and 65-90% at level 120. This effect forces the suspension to work in a manner that is essentially unstable, since if the motorcycle is accelerated when the suspension is already very compressed it tends to compress further. If, however, the motorcycle is accelerated when the suspension is already very extended, the suspension tends to extend even more.

Figure 5 shows the scheme of an embodiment of the suspension according to the present description, which comprises a swingarm 1 configured to be mechanically connected in a movable manner to one or more portions of a frame 2 of a vehicle, in particular of a cycle, more particularly of a motorcycle, by means of intermediate elements 3, 4 configured to rotate with respect to the swingarm 1 and the frame 2, so that the swingarm 1, the frame 2 and the intermediate elements 3, 4 form an articulated quadrilateral configured to rotate around at least four rotation axes A1, A2, A3, A4 substantially parallel to each other. A first intermediate element 4 of said intermediate elements 3, 4 comprises a control arm 4 which is pivoted to the swingarm 1 to rotate around a first axis A1 and is pivoted to the frame 2 to rotate around a fourth axis A4. A second intermediate element 3 of said intermediate elements 3, 4 comprises an eccentric pin 3 which is pivoted to the swingarm 1 to rotate around a second axis A2 and around the frame 2 to rotate around a third axis A3. The swingarm 1 can therefore oscillate between a first extreme position EP' at a level of 120 with the suspension compressed and a second extreme position EP" at a level of 0 with the suspension extended. The frame 2 can be fixed to an engine 7 of the vehicle or consist of a frame which supports this engine. The frame 2 can also be a portion of the engine 7, i.e. the engine 7 can incorporate one or more portions of the frame 2 or act as a frame itself, i.e. the engine 7 can incorporate the entire frame 2. The frame 2 can also be a separate structure, of any shape and size, which is configured to be fixed to an element of the vehicle. In mixed embodiments, the swingarm 1 is pivoted to a portion of the engine 7 to rotate around the fourth rotation axis A4, while the eccentric pin 3 is pivoted to the frame 2 to rotate around the third rotation axis A3, or vice versa in an alternative embodiment. The engine 7 of the vehicle may be mechanically connected to a drive wheel, in particular a pinion 5 of a transmission, for example a chain drive, to transmit a driving force to one or more wheels of the vehicle. The pinion 5 may then rotate around a fifth rotation axis A5 relative to the frame 2 and/or the engine 7. The control arm 4 in the present embodiment is preferably located below the reference line LR since in this position it is subject to compressive forces. The control arm 4 may also be positioned above the reference line LR and be subject to tractive forces during suspension operation. The control arm 4 in figure 5 can essentially be arranged in a mirror-like manner above the reference line LR, while still maintaining the entire kinematics unchanged.

Preferably, the distance between the first rotation axis A1 and the fourth rotation axis A4, i.e. the centre distance of the control arm 4, is greater than the distance between the second rotation axis A2 and the third rotation axis A3, and/or the distance between the first rotation axis A1 and the second rotation axis A2 is greater than the distance between the second rotation axis A2 and the third rotation axis A3, i.e. the centre distance of the eccentric pin 3.

Therefore, the swingarm 1 is not directly pivoted to the frame 2 but is pivoted at one end of the control arm 4, which is pivoted to the frame 2. The swingarm 1 then rotates relative to the frame 2 guided by the eccentric pin 3 and the control arm 4. In the first extreme position EP' the swingarm 1 rotates around a first centre of instantaneous rotation CIR' while in the second extreme position EP" the swingarm 1 rotates around a second centre of instantaneous rotation CIR". The trajectory followed by the rear wheel axis is to a small approximation equal to an arc of a circle with its centre at a point which can be indicated as the virtual centre of rotation CRV.

Figure 6 shows a driven wheel, in particular a crown gear 6, which is coupled to a transmission, in particular a chain 9, which is in turn coupled to a drive wheel, i.e. the pinion 5 of the engine 7. The swingarm 1 rotatably supports a wheel 8 of a vehicle with one or more wheels, in particular a drive wheel of the vehicle, more particularly the rear wheel of the motorcycle, which can rotate around a sixth rotation axis A6. The swingarm 1 can be single or double, so as to support one side or both sides of the wheel 8 respectively. The crown gear 6 is integral with the wheel 8, in particular with a hub of this wheel. The crown gear 6 and the wheel 8 are shown respectively in the two extreme positions of the swingarm 1, at 0 mm and 120 mm respectively, i.e. in the extended and compressed position of the suspension.

Preferably, the first rotation axis A1, the second rotation axis A2, the third rotation axis A3, the fourth rotation axis A4, the fifth rotation axis A5 and/or the sixth rotation axis A6 are substantially parallel to each other. Preferably, when the swingarm 1 is in a given position, preferably in the neutral position (60 mm), the second axis A2, the third axis A3, the fifth axis A5 and the sixth axis A6 are substantially aligned on the same plane. Preferably, the four rotation axes A1, A2, A3, A4 of the articulated quadrilateral are arranged in a space between two reference planes PR that are substantially parallel to each other, wherein the fifth rotation axis A5 lies on the first of these two planes PR and the sixth rotation axis A6 lies on the second of these two planes PR.

The suspension therefore forms a flat four-link articulated quadrilateral, in which a portion of the frame 2 forms the fixed arm of the articulated quadrilateral, to which both the control arm 4 and the eccentric pin 3 are pivoted, which in turn form the connecting arms to the swingarm 1, which forms the movable element of the articulated quadrilateral. In an articulated quadrilateral with four links, the movable element has a centre of instantaneous rotation for each individual position in which the articulated quadrilateral can be found. This centre of instantaneous rotation is located at the intersection of the longitudinal axes of the connecting arms, i.e. of the eccentric pin 3 and the control arm 4.

When the suspension compresses, the instantaneous centre of rotation of the swingarm 1 moves upwards along the longitudinal axis of the control arm 4, while when the suspension extends the instantaneous centre of rotation of the swingarm 1 moves downwards, always along the longitudinal axis of the control arm 4. This kinematic mechanism forces the sixth rotation axis A6 of the rear wheel 8 to move along a trajectory AC substantially in the shape of an arc of a circle around the virtual centre of rotation CRV, which is preferably located at the limit or outside of said space between the two reference planes PR, i.e. in front of the fifth rotation axis A5 with respect to the direction of travel of the vehicle in the case of the present embodiment of the suspension. During the suspension travel, the sixth rotation axis A6 of the wheel 8 therefore moves as if it were supported by a virtual swingarm connected to the frame 2 in the virtual centre of rotation CRV and of length equal to the distance between the sixth rotation axis A6 and the CRV.

During the design phase, it is possible to size the various suspension components so as to position the virtual centre or rotation CRV at the chosen point based on the desired dynamic behaviour of the suspension, for example by positioning the virtual centre of rotation CRV at the fifth rotation axis A5 of pinion 5, i.e. at the limit of the space between the two reference planes PR. This solution has the advantage that the chain distance 9, i.e. the distance between the fifth rotation axis A5 and the sixth rotation axis A6, remains constant throughout the entire suspension travel. If the virtual centre of rotation CRV were located in the space between the reference planes PR, in particular between the rotation axis A5 of pinion 5 and the rotation axis A3 of the eccentric pin 3, the variability of both the anti-squat value AS and the chain distance 9 would be increased.

While the motorcycle is in motion, the rotation axis A6 of the rear wheel 8 moves with respect to the frame 2 as a function of the travel of elastic means comprising a spring- shock absorber unit and the movement of any levers by which these elastic means are mechanically connected to the swingarm 1 and to the frame 2.

The present embodiment of the method allows the sizing of all the schematic elements constituting the suspension as well as the positioning of all the rotation axes of said elements. Starting from a motorcycle whose general architecture is already pre-established, a first phase includes the definition of the position of the axis A5 of the pinion 5 on the frame 2 as a function of the constant anti-squat value AS that is to be obtained. A second phase includes the definition of the size and position of all the constituent elements that allow obtaining a virtual swingarm that can rotate around a virtual centre of rotation CRV.

For this reason, the method according to the present description provides for identifying the centre of instantaneous rotation of the swingarm 1 at the point where the longitudinal axis of the control arm 4 and the radial axis of the eccentric pin 3 meet. For this purpose, the centre of instantaneous rotation of the swingarm 1 is preferably arranged on the intersection of a plane passing through the first rotation axis A1 and the fourth rotation axis A4 with a plane passing through the second rotation axis A2 and the third rotation axis A3, in any position of extension or compression of the suspension.

In order to have an anti-squat value AS that is as constant as possible during its travel, the rotation axis A6 of the wheel 8 must therefore describe a trajectory AC as close as possible to an arc of a circle having a centre in a position close to or more advanced than the rotation axis A5 of the pinion 5, i.e. the rotation axis A5 coincides with the virtual centre of rotation CRV or is arranged between the virtual centre of rotation CRV and the rotation axis A6 of the wheel 8.

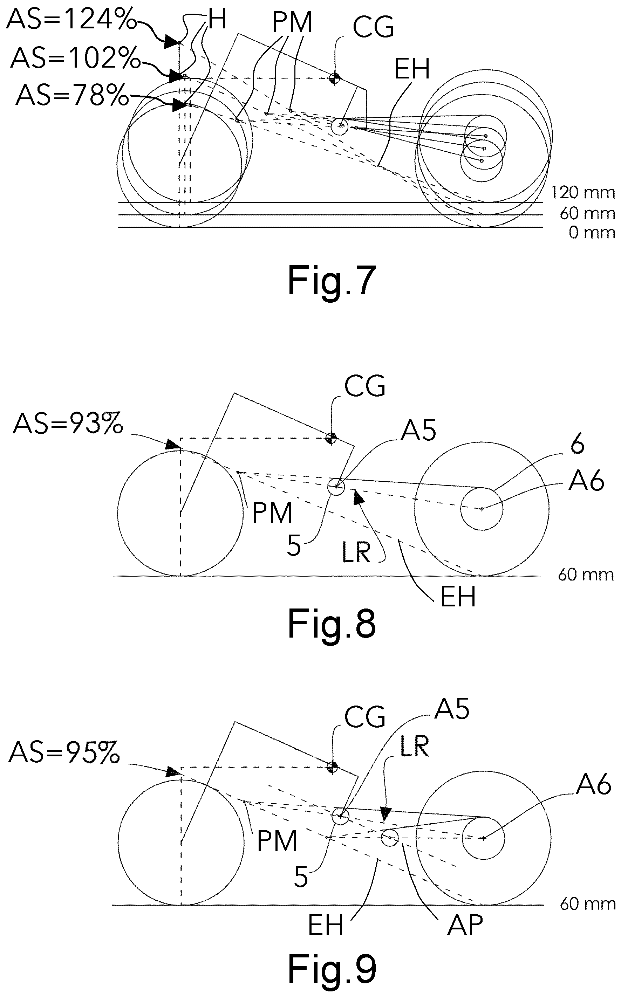

Figure 7 shows the motorcycle with the known type of suspension in three different positions, i.e. a first position with the suspension fully compressed (120 mm) and an anti-squat value AS equal to 124%, a second position at half travel (60 mm) and an anti-squat value AS equal to 102%, and a third position with the suspension fully extended (0 mm) and an anti-squat value AS equal to 78%. For simplicity, the position of the centre of gravity CG has been left fixed with respect to the frame 2 even if, in reality, with the complete compression of the suspension the centre of gravity CG moves upwards with respect to the motorcycle frame, due to the movement of the unsprung masses, by a level that can be estimated at around 15 mm. For this reason, the variability of the anti-squat value AS from 124% to 78% is slightly underestimated. Figure 7 also shows the three anti-squat axes EH corresponding to the three anti-squat values AS. The anti-squat axis EH passes through the contact point of the rear wheel with the ground and through the respective poles of momenta PM at the three levels of 0, 60 and 120 mm. The point H indicating the anti-squat value in the corresponding position of the suspension is located at the intersection between the vertical of the contact point of the front wheel with the ground and the anti-squat axis EH in the three positions.

To create the suspension, it is preferable to proceed according to the method comprising the following phases.

In a first phase of the method, a desired anti-squat value AS' is determined, for example 95%, which should remain substantially constant throughout the suspension travel, for example from 0 mm to 120 mm.

A second phase shown in figure 8, with the suspension in a neutral position, in particular with the swingarm at half travel, i.e. 60 mm in this example, starts from the arrangement of the components of the same motorcycle equipped with a traditional suspension with the swingarm pivoted at a point on the frame, after which this swingarm is eliminated and an axis of the upper section of the chain is identified, tangent to the pinion 5 and to the crown gear 6, after which a reference line LR is determined passing through the sixth rotation axis A6 of the wheel, i.e. the crown gear 6, and through the fifth rotation axis A5 of the pinion 5. This reference line LR is useful for sizing and positioning all the suspension elements. In particular, the reference line LR allows the suspension to be configured so that it has the same chain spacing value in the two extreme positions at 0 mm and at 120 mm. The intersection between the reference line LR and the upper section of the chain identifies a pole of momenta PM which in turn determines an anti-squat value AS of 93%. Therefore, in this position if the rotation fulcrum of the swingarm (real or virtual) is on the reference line LR, an anti-squat value AS equal to 93% will always be obtained.

Given the desired constant value of anti-squat AS' equal to 95% set at the beginning, in a third phase shown in figure 9, still with the suspension in neutral position, a new position of the pinion 5 is identified, i.e. of the fifth rotation axis A5, moving it until the desired value of anti-squat AS' equal to 95% is obtained. To this end, having placed the anti-squat axis EH at the desired value of anti-squat AS', the position of the fifth rotation axis A5 must be identified on a positioning axis AP, which is substantially parallel to the anti-squat axis EH, at a certain distance from it. For example, the level from the ground of the rotation axis A5 of the pinion 5 can be kept unchanged, with the consequence that the rotation axis A5 must be moved back horizontally by 15 mm. Alternatively, the position of the pinion 5 can be fixed horizontally along the longitudinal axis of the frame 2 on the positioning axis AP and the level of the pinion 5 from the ground will depend on this longitudinal position. In the example in figure 9, the position of the fifth rotation axis A5 has been varied both in level and longitudinally, always on the positioning axis AP, depending on the structure of the motorcycle, of the frame 2 and/or of the engine 7.

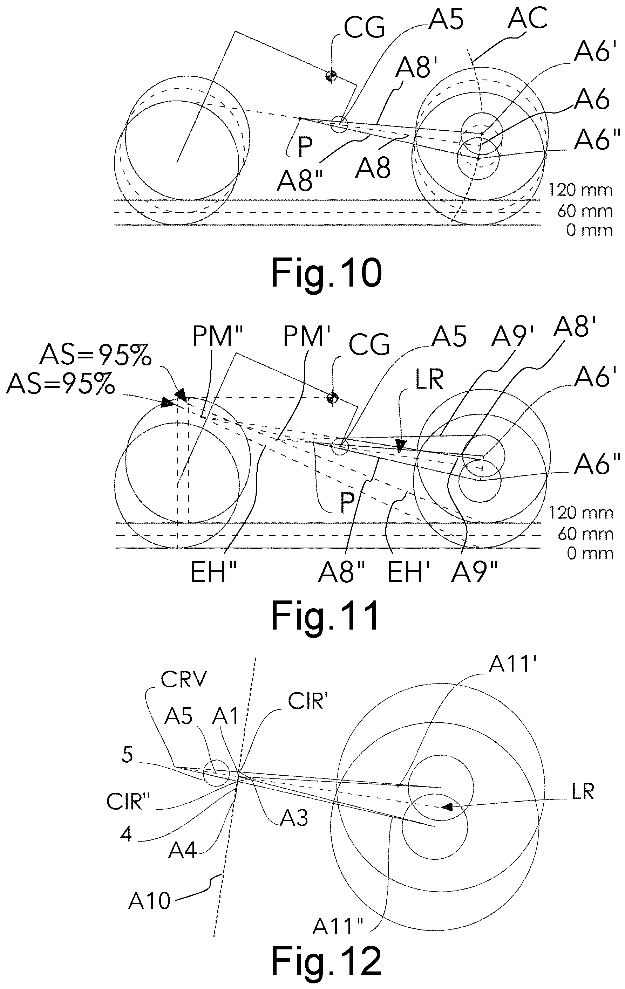

In a fourth phase shown in figure 10, in the motorcycle configuration with the suspension in neutral position, i.e. at half travel, the positions of the centre of gravity CG, of the front wheel, of the rotation axis A6 of the rear wheel 8, of the pinion 5, of the crown gear 6 and of the reference line LR are fixed. The fulcrum of the swingarm, real or virtual, must be located on the reference line LR at a point P whose position is yet to be defined.

In this mid-travel position, the motorcycle will have an anti-squat value AS of 95%, regardless of the position of point P and therefore of the length of the swingarm.

In order for the motorcycle in figure 10 to have a constant value AS of 95%, the ideal swingarm, the length of which is yet to be determined, is indicated by a first longitudinal axis A8 at the neutral level of 60 mm and by corresponding first longitudinal axes A8' and A8" at the level of 120 mm and 0 mm respectively. The rotation axis A6, whose position at the level of 60 mm is already fixed, will be found at point A6' at the level of 120 mm and at point A6" at the level of 0 mm. The rotation axes A6' and A6" are located on the arc AC which represents the kinematic trace of the rotation axis A6 during rotation around point P. It therefore remains to define only the position of the ideal point P along the reference line LR.

In a fifth phase shown in figure 11 the anti-squat axes EH' and EH" are determined for the anti-squat value AS of 95%, at level 120 mm and level 0 mm respectively. The extreme positions A9', A9" of a second longitudinal axis A9 aligned with the upper section of the chain 9 are then determined. The two poles of momenta PM' and PM" at the extreme positions at level 120 mm and at level 0 mm are determined at the intersections between the second longitudinal axis A9' and A9" and the anti-squat axes EH' and EH" at these two extreme positions. The final position of the ideal point P on the reference line LR is then determined by imposing that the first longitudinal axis A8' passes through the pole of momenta PM' at level 120 mm and that the first longitudinal axis A8" passes through the pole of momenta PM" at level 0 mm.

The position of point P thus obtained is now unique and fixed with respect to the motorcycle frame 2. A swingarm 1 hinged to the frame 2 at point P guarantees an anti-squat value AS equal to 95% in the three positions 0 mm, 60 mm and 120 mm and in any case this value is between 94% and 96% along the entire travel of the swingarm 1. Point P is located in this case in the engine 7.

In a sixth phase shown in figure 12, the virtual centre of rotation CRV of the suspension is placed at the ideal point P identified in the previous phase. The reference line LR acts as the axis of symmetry between the two extreme positions of the suspension. A first perpendicular axis A10 is then defined which is perpendicular to the reference line LR at the first rotation axis A1 of the swingarm 1 on the control arm 4, at a distance from the fifth rotation axis A5 of the pinion 5 which is sufficient to avoid interference of the front portion of the swingarm 1 with the engine 7. The first perpendicular axis A10 intersects two third longitudinal axes A11', A11" which connect the virtual centre of rotation CRV with the rotation axis A6 of the rear wheel in the two extreme positions of the suspension, thus identifying two instantaneous centres of rotation CIR', CIR" of the swingarm 1 which serve to obtain the desired behaviour. Preferably, the longitudinal axis of the control arm 4 also lies on the first perpendicular axis A10.

In a seventh phase, the length of the control arm 4 is freely defined, considering the relative dimensions and the fact that by increasing the length of the control arm 4, the trend of the anti-squat value AS as a function of the suspension travel becomes increasingly linear. If the longitudinal axis of the control arm 4 at half the suspension travel is perpendicular to the reference line LR, the trend of the anti-squat value AS is symmetrical with respect to the anti-squat value AS at half the travel, otherwise it is asymmetrical.

In an eighth phase, the distance between the first rotation axis A1 of the swingarm 1 relative to the control arm 4 and the second rotation axis A2 of the swingarm 1 relative to the eccentric pin 3 is defined, as well as the distance between the centres of the eccentric pin 3, i.e. the distance between the second rotation axis A2 of the swingarm 1 relative to the eccentric pin 3 and the third rotation axis A3 of the eccentric pin 3 relative to the frame 2.

In a ninth phase, the positions of the longitudinal axes of the swingarm 1 are defined in the two extreme positions of the suspension.

In a tenth phase, the axes connecting both instantaneous centres of rotation CIR', CIR" are defined with a point on the reference line LR located between the first rotation axis A1 of the swingarm 1 relative to the control arm 4 and the rotation axis A6 of the rear wheel relative to the swingarm 1. In this way, the distance between the centres of rotation of the eccentric pin 3 depends geometrically on the distance between the second rotation axis A2 of the swingarm 1 relative to the eccentric pin 3 and the third rotation axis A3 of the eccentric pin 3 relative to the frame 2.

In an eleventh phase, the position on frame 2 of the rotation axis A3 of the eccentric pin 3 is also determined, thus defining the position of the first four rotation axes A1, A2, A3 and A4 of the suspension.

This scheme and method therefore allow the anti-squat value AS to be kept substantially constant throughout the entire suspension travel.

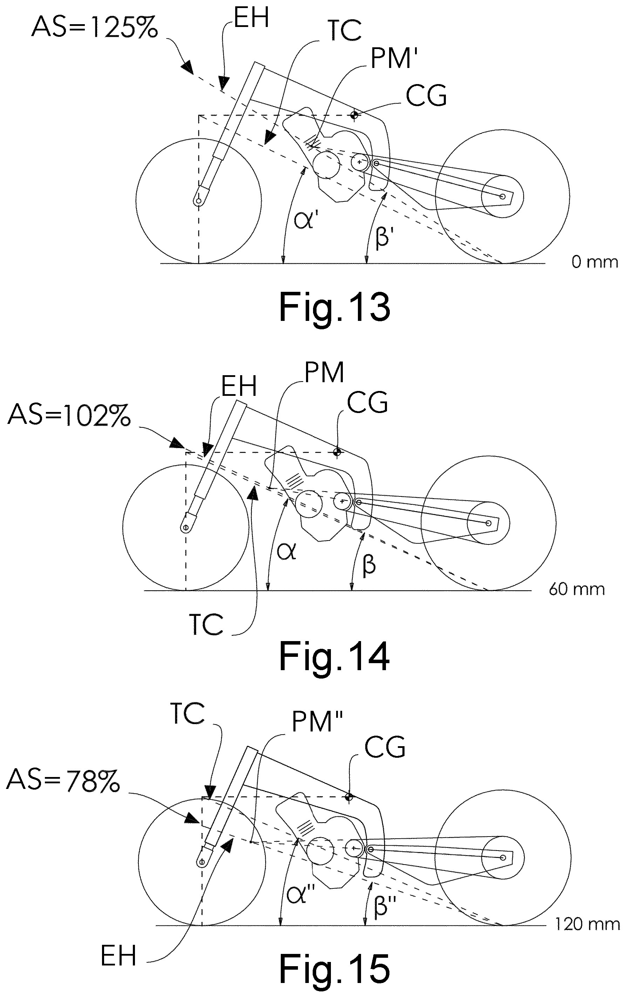

Figures 13-15 show the motorcycle with the known suspension under acceleration and an anti-squat value AS of 125% in the fully extended position of the suspension, i.e. 0 mm, an anti-squat value AS of 102% in the position with the suspension at 60 mm, i.e. halfway through the travel, and an anti-squat value AS of 78% in the position with the suspension at 120 mm, i.e. fully compressed, with the centre of gravity CG, the anti-squat line EH and the load transfer line TC.

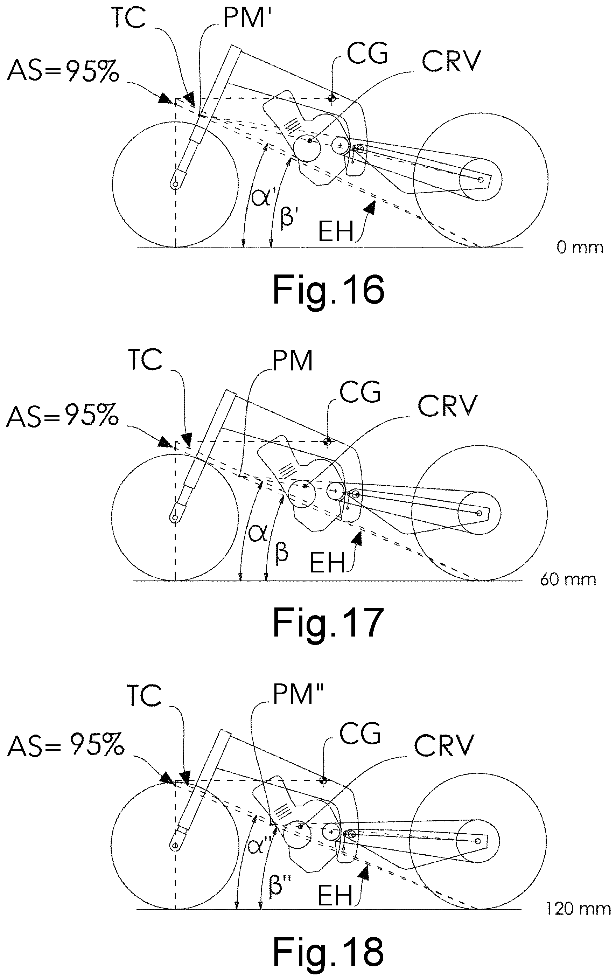

Figures 16-18 show the motorcycle with the present suspension in direct comparison with the known motorcycle in figures 13-15. The two motorcycles have the same cycling parameters such as wheelbase, wheel diameter, steering axis angle, and position of the centre of gravity. The diameters of the pinion 5 and of the crown gear 6 are also the same for the two motorcycles. With the adoption of the present suspension, an anti-squat value AS of 95% is obtained, which is substantially constant along the entire travel. The virtual centre of rotation CRV of the sixth rotation axis A6 of the wheel 8 is substantially stationary with respect to the motorcycle.

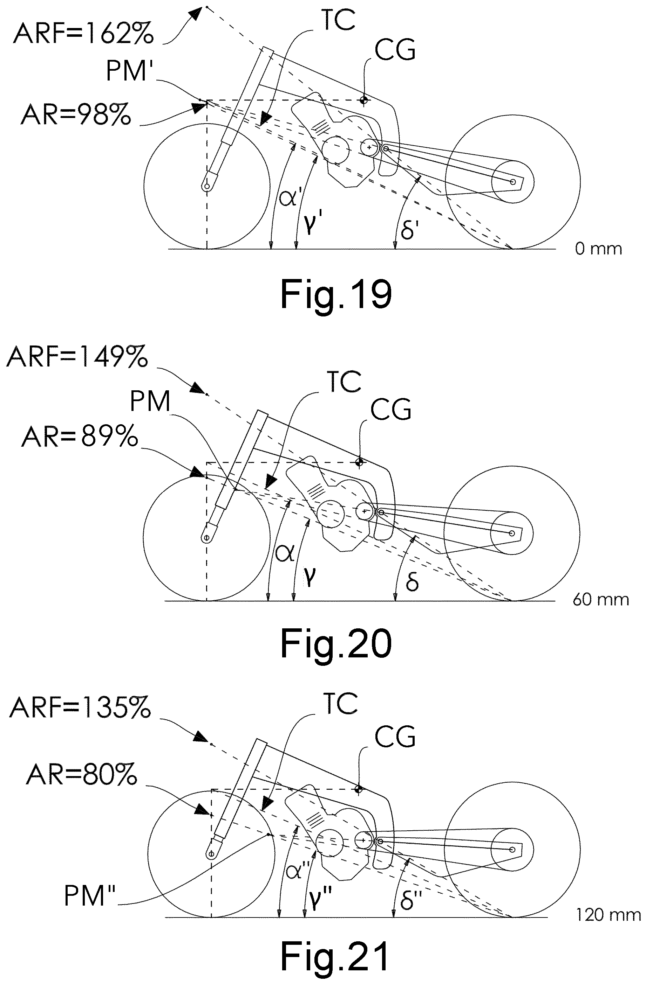

Figures 19-21 show the motorcycle with the known type of suspension and the relative trend of the values of the anti-rise AR and of the braking anti-rise ARF in the three positions of maximum extension (0 mm), half travel (60 mm) and maximum compression (120 mm) , with the respective anti-rise angles γ', γ and γ" and braking anti-rise angles δ', δ and δ".

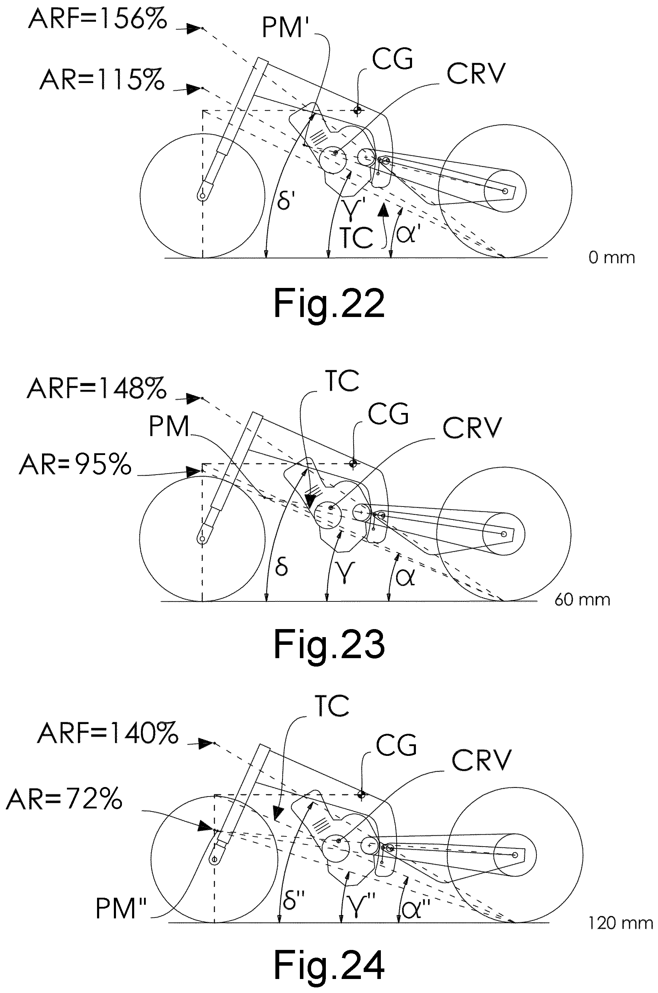

Figures 22-24 show the motorcycle with the present suspension in direct comparison with the previous known motorcycle in figures 19-21, in the three positions of maximum extension (0 mm), half-travel (60 mm) and maximum compression (120 mm). In this situation, similarly to the known suspension, the values of the braking anti-rise ARF are obtained by considering as the pole of the momenta of the suspension the centre of rotation of the swingarm 1 on the frame 2, which in this case is the centre of instantaneous rotation CIR of the swingarm 1. The two suspensions are characterized by a value of braking anti-rise ARF at half-travel that is substantially the same, but the suspension proposed here shows a more limited variation. The anti-rise value AR, with the suspension described here, instead undergoes a slightly greater variation than the typical variation of the known suspension.

The comparison between the known suspension from figures 13-15 and 19-21 and the suspension of figures 16-18 and 22-24 presents further technical advantages. The present suspension allows a variation of the chain wheelbase along the travel that is approximately one third of the variation in the known suspension. The unsprung mass, or rather the overall inertia of the moving elements of the present suspension, is equal to or less than that of the known suspension. The creation of a virtual swingarm with the optimum length gives the designer greater freedom in the design phase: there is no longer the requirement for the engine to be extremely compact in the longitudinal direction and for it to be placed as far forward as possible with respect to the direction of travel. The engine can be installed in a slightly more rearward position with the result of an increased static load on the drive wheel and a better overall grouping of the masses with the known advantages in terms of handling of the motorcycle. The linkage connecting the spring-shock absorber unit to the swingarm and any pivots on the frame to direct the movement can also be completely eliminated. The spring-shock absorber unit, unlike the example described here, can therefore directly connect the frame to the swingarm.

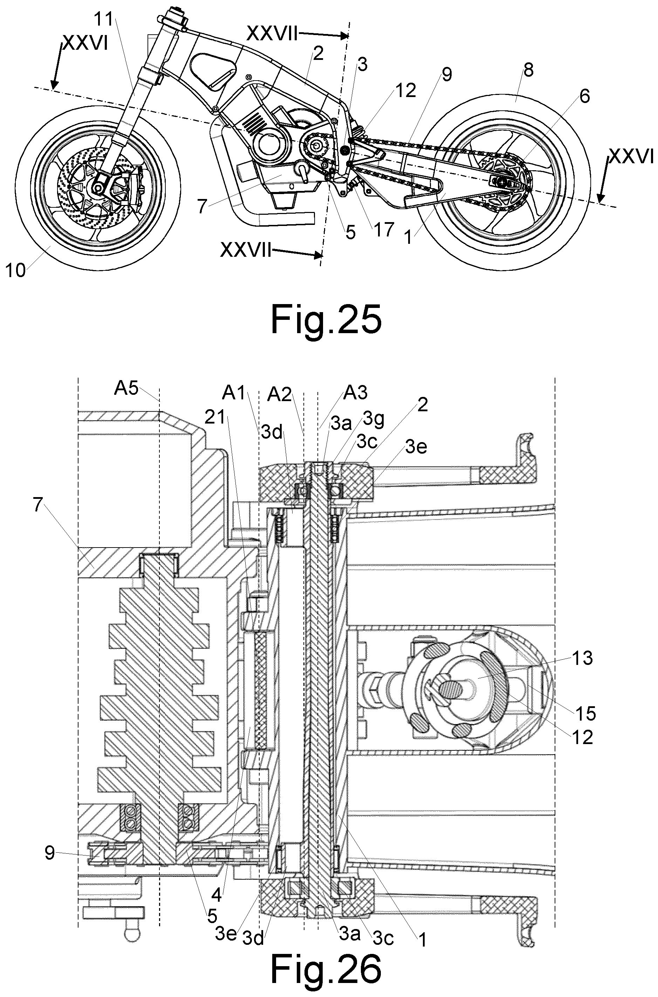

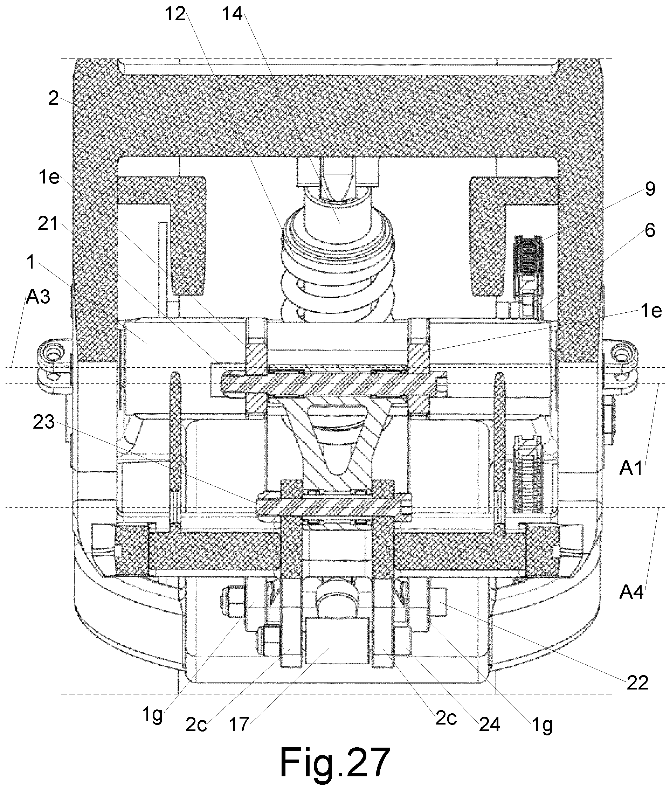

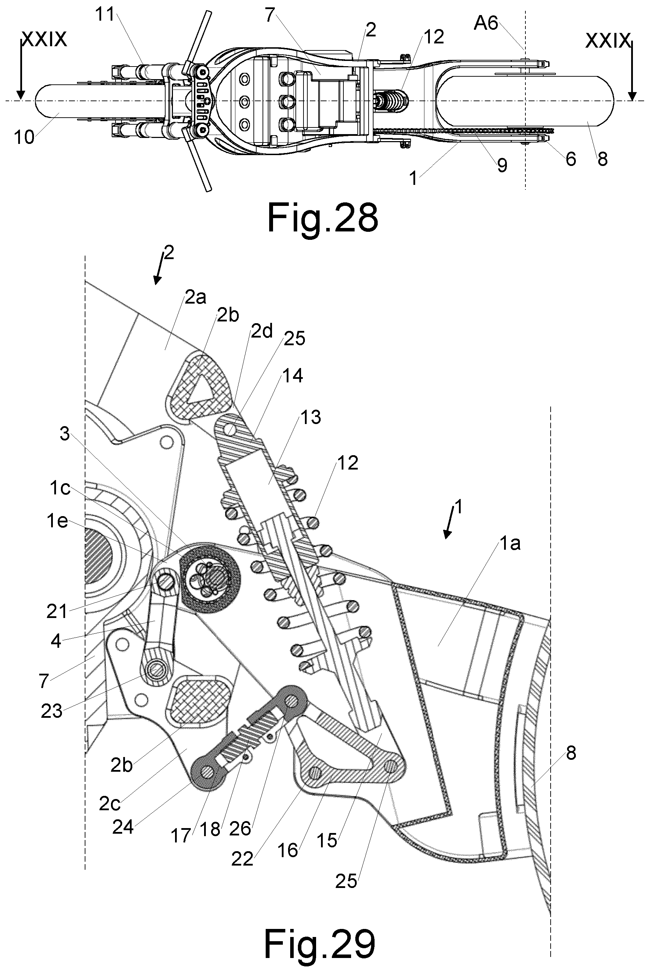

Figures 25-29 show the present embodiment of the suspension applied to a motorcycle provided with a frame 2 supporting an engine 7. A rear wheel 8 is mechanically connected to the frame 2 by means of a rear suspension, in particular the suspension according to the present description, which comprises a swingarm 1 supporting the rear wheel 8. The rear wheel 8 is integral with a crown gear 6 mechanically connected, in particular by means of a chain 9, to a pinion 5 which can be driven by the engine 7. A front wheel 10 is mechanically connected to the frame 2 by means of a front suspension 11.

Elastic means, in particular a coil spring 12 provided with a shock absorber 13, may be arranged between the frame 2 and the swingarm 1 to oppose the compression and/or extension, in particular the compression, of the suspension due to the forces acting on the motorcycle, including the force of gravity. Preferably, the coil spring 12 is arranged between two spring supports 14, 15, wherein the first spring support 14 is pivoted to the frame 2 and the second spring support 15 is pivoted to a rocker arm 16 which in turn is pivoted to the swingarm 1. In an alternative embodiment, the second spring support 15 may be pivoted directly to the swingarm 1. The first spring support 14 may comprise a shock absorber cylinder 13 and the second spring support 15 may comprise a piston which may slide in the shock absorber cylinder 13, as in the present embodiment, or vice versa. The rocker arm 16 is pivoted to an adjustment arm 17 which is in turn pivoted to the frame 2. The length of the adjustment arm 17 can be varied, in particular by means of a screw mechanism 18, to adjust the inclination of the rocker arm 16 and consequently the distance between the two spring supports 14, 15, the effect of the spring 12 on the swingarm 1, as well as the level from the ground of the rear portion of the motorcycle. The suspension control arm 4 is pivoted between the swingarm 1 and the frame 2. The swingarm 1 is pivoted to the eccentric pin 3 which is pivoted to the frame 2.

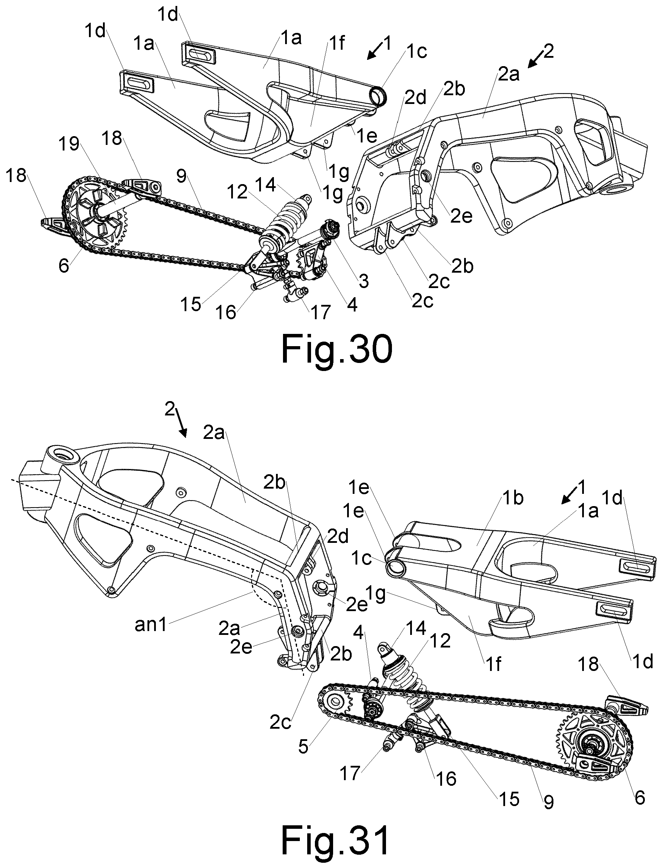

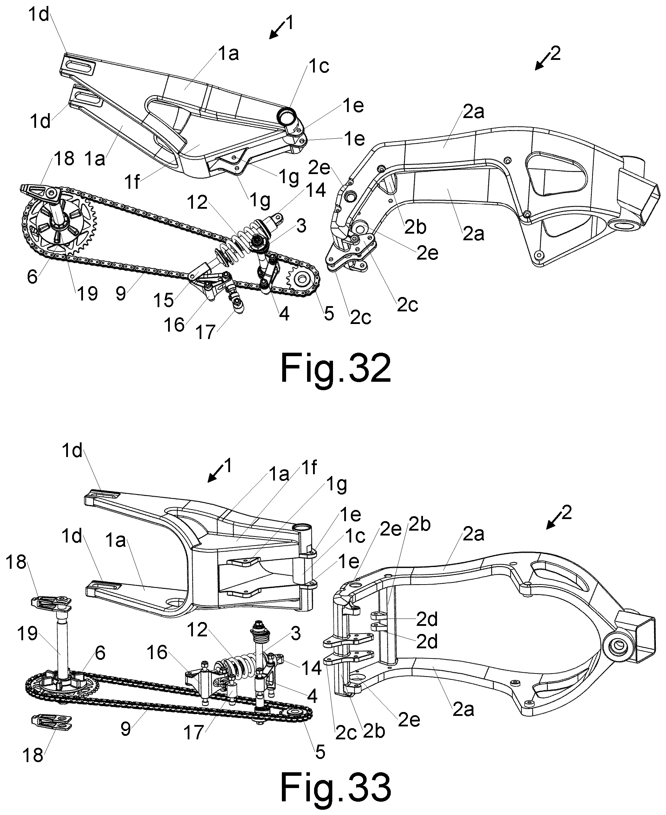

With reference also to figures 30-33, the swingarm 1 may comprise two side elements 1a joined by a cross element 1b, so that the swingarm 1 is H- or h-shaped when viewed from above. Adjacent ends, in particular the adjacent front ends, of the side elements 1a of the swingarm 1 are joined to a hub 1c configured to rotatably accommodate the eccentric pin 3 to rotate around the second rotation axis A2. One or more rear ends of the side elements 1a of the swingarm 1 include seats 1d for hub supports 18 configured to support a hub 19 of the rear wheel 8. The hub supports 18 may be moved longitudinally relative to the swingarm 1 to tension the chain 9. One or more first lugs 1e protrude from the hub 1c and/or from the front ends of the side elements 1a of the swingarm 1 to accommodate a first pin 21 configured to pivot the swingarm 1 to the control arm 4 to rotate around the first rotation axis A1. The swingarm 1 may also include two side walls 1f protruding under each side element 1a of the swingarm 1. One or more second lugs 1g protrude from each side wall 1f respectively to accommodate a second pin 22 configured to pivot the swingarm 1 to the rocker arm 16.

The frame 2 may comprise two side elements 2a joined by one or more cross elements 2b. The rear ends of the side elements 2a are joined by a first cross element 2b. One or more first lugs 2c protrude from the first cross element 2b of the frame 2 to accommodate a third pin 23 configured to pivot the control arm 4 to the frame 2 to rotate around the fourth rotation axis A4, as well as a fourth pin 24 configured to pivot the adjustment arm 17 to the frame 2. One or more second lugs 2d protrude from a second cross element 2b arranged between the side elements 2a of the frame 2 to accommodate a fifth pin 25 configured to pivot the first spring support 14 of the elastic means 12, 13, 14, 15 to the frame 2. Said two cross elements 2b are arranged substantially one above the other and the portions of the side elements 2a that are arranged between these two cross elements 2b form an angle an1 with respect to the rest of the side elements 2a, so as to extend downwards, and comprise hubs 2e configured to rotatably accommodate the eccentric pin 3 and pivot the eccentric pin 3 to the frame 2 to rotate around the third rotation axis A3. The rocker arm 16 is pivoted to the adjustment arm 17 by means of a sixth pin 26.

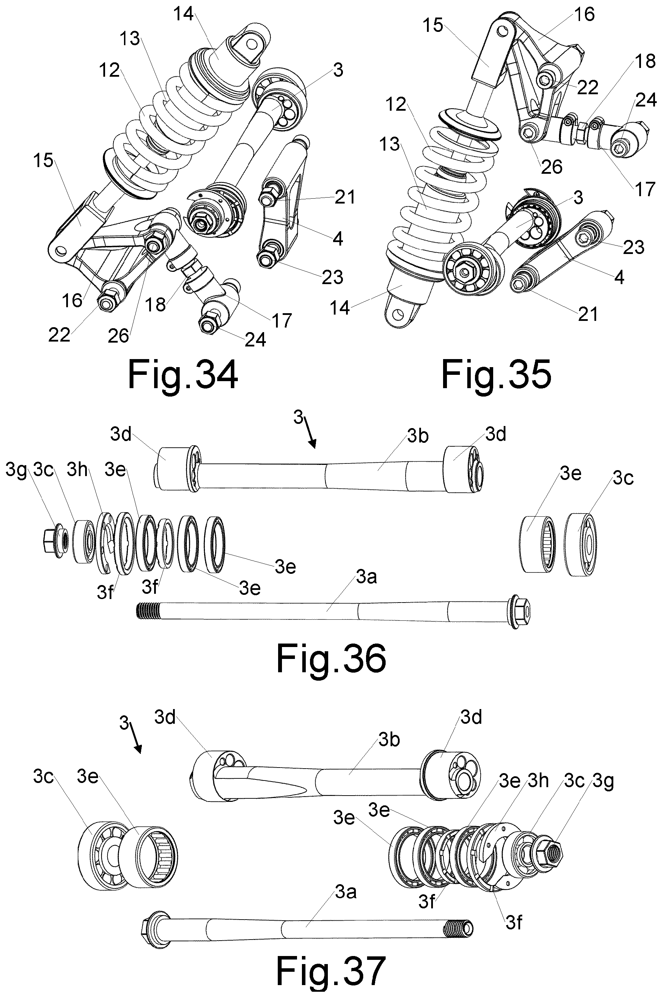

Referring also to figures 34-35, the rocker arm 16 has a substantially isosceles triangular prism shape, wherein the second pin 22 is arranged at substantially the same distance from the fifth pin 25 (not shown in figures 34-35) and from the sixth pin 26. The control arm 4 has a substantially isosceles trapezoidal prism shape, in which the first pin 21 is arranged along the major base of the trapezium and the third pin 23 is arranged along the minor base of the trapezium.

With reference also to figures 36-37, the eccentric pin 3 comprises a screw 3a which passes through a longitudinal cavity of a shaft 3b and is screwed into a nut 3g, so that one or more first bearings 3c, in particular a roller bearing and a ball bearing, can be longitudinally locked by the screw 3a at each end of the shaft 3b. The first bearings 3c arranged at the ends of the shaft 3b are in turn inserted into the hubs 2e of the frame 2, so that the shaft 3b of the eccentric pin 3 can rotate with respect to the frame 2 thanks to the first bearings 3c around the third rotation axis A3. The shaft 3b comprises one or more eccentric extensions 3d, in particular having a substantially cylindrical shape with a longitudinal axis substantially parallel to the longitudinal axis of the shaft 3b. One or more second bearings 3e, in particular a needle bearing and a group of three bearings comprising a first radial ball bearing and at least two angular contact ball bearings, are arranged on the eccentric extensions 3d and are locked by threaded rings 3f screwed into the hub 1c of the swingarm 1 and onto the eccentric extensions 3d of the eccentric pin 3 to allow rotation of the shaft 3b in the hub 1c of the swingarm 1 around the second rotation axis A2. A ring 3h allows a first bearing 3c to be locked in a hub 2e of the frame 2 by means of screws (not shown) which pass through its holes and are screwed into the frame 2. The ring 3h is open from the rear side in the direction of travel to allow the swingarm 1, the eccentric pin 3 and all the connecting elements 3c, 3e and 3f to be dismantled as a single assembly. The disassembly procedure of this assembly is the same as that of the known suspension with the addition of the disassembly of at least one of the two pins 21 and 23.

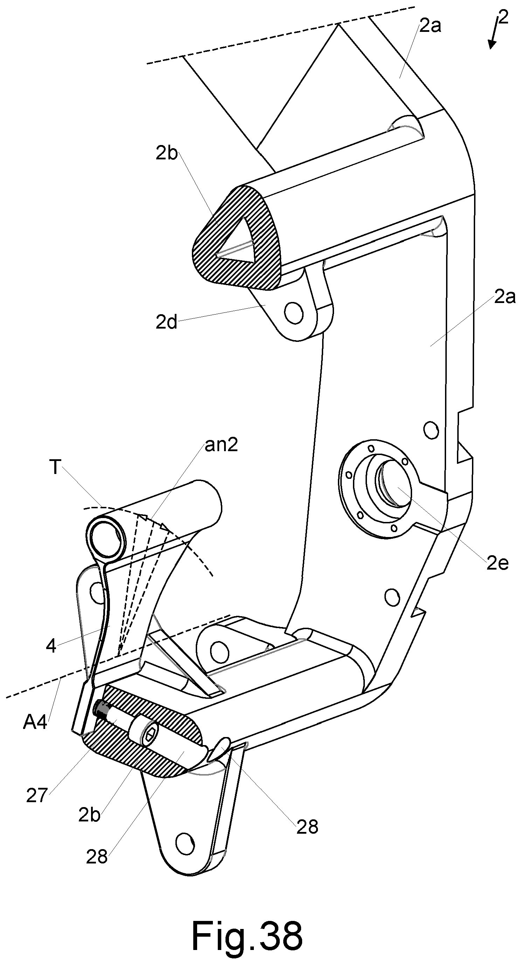

The embodiment of figure 38 is similar to the previous embodiment but the control arm 4 is fixed to the frame 2 and is flexible, for example being made of harmonic steel. The control arm 4 can be fixed to the frame 2 by one or more screws 27 inserted in respective holes 28 made in the first cross element 2b of the frame 2. The control arm 4 has a highly elastic area, in which the flexure is concentrated, at the rotation axis A4 of the previous embodiment. The second end of the control arm 4 can instead comprise a hub for the first pin 21, so as to pivot the control arm 4 to the swingarm 1 as in the previous embodiment. The control arm 4 of this embodiment can therefore flex to rotate around the fourth rotation axis A4 following a trajectory T which has a substantially circular arc shape for an angle an2. In the present embodiment the angle an2 is approximately 0.8° and/or the parameters AS, AR and ARF are substantially the same as those of the previous embodiment. The control arm 4, although flexible, can be arranged either below or above the reference line LR.

In other embodiments, the swingarm 1 and/or the frame 2 may comprise devices suitable for modifying the position of the rotation axes A1, A2, A3 and/or A4 with respect to the swingarm 1 and/or the frame 2 in order to further adjust the anti-squat value AS before use. In particular, to modify the distance between the rotation axes A1 and A4, said devices may comprise a control arm 4 which can be shortened or lengthened, for example with a screw mechanism also of a known type, and/or a movable support also of a known type, which comprises the first pin 21 and which can translate and/or rotate with respect to the swingarm 1, and/or a movable support also of a known type, which comprises the third pin 23 and which can translate and/or rotate with respect to the frame 2.

In other embodiments, the transmission of motion from an engine or other driving means, for example from the pedals of a bicycle, to one or more front or rear drive wheels of the vehicle, can be obtained by means of transmissions other than a system with pinion, chain and crown gear, such as for example by means of a belt or shaft transmission system, or even with hydraulic or electric systems.

Further embodiments may include one or more of the following features:
the swingarm 1 comprises a hub 1c configured to rotatably accommodate the eccentric pin 3 to rotate around the second rotation axis A2;
the swingarm 1 comprises two side elements 1a joined by a cross element 1b, in which adjacent ends of the side elements 1a are joined to the hub 1c;
one or more first lugs 1e protrude from said adjacent ends of the side elements 1a to accommodate a pin 21 configured to pivot the swingarm 1 to the control arm 4 to rotate around the first rotation axis A1;
elastic means 12, 13, 14, 15 are hinged to the rocker arm 16 and are configured to be arranged between the swingarm 1 and the frame 2;
elastic means 12, 13, 14, 15 comprise a coil spring 12 which is provided with a shock absorber 13 and is arranged between two spring supports 14, 15, wherein the first spring support 14 is configured to be pivoted to the frame 2 and the second spring support 15 is pivoted to the rocker arm 16.

Variations or additions may be made by those skilled in the art to the embodiments described and illustrated herein, remaining within the scope of the following claims. In particular, further embodiments may comprise the technical characteristics of one of the following claims with the addition of one or more technical characteristics described in the text or illustrated in the drawings, taken individually or in any mutual combination and comprising their equivalent characteristics.

Furthermore, the terms "one", "two", etc. in the description and claims mean respectively "at least one", "at least two", etc., unless otherwise specified. Similarly, angles, proportions and values cited in the text and/or shown in the drawings include a tolerance of at least 5%, unless otherwise specified.

## Claims

1. Suspension for vehicles, which comprises a swingarm (1) configured to rotatably support a wheel (8) and to be mechanically connected, in a movable manner, to one or more portions of a frame (2) of a vehicle by means of intermediate elements (3, 4) configured to rotate or flex with respect to the swingarm (1) and the frame (2), so that the swingarm (1), the frame (2) and the intermediate elements (3, 4) form an articulated quadrilateral configured to rotate or flex around at least four rotation axes (A1, A2, A3, A4) substantially parallel to each other, **characterised in that** a first intermediate element (4) of said intermediate elements (3, 4) comprises a control arm (4) which is pivoted to the swingarm (1) to rotate around the first rotation axis (A1) of said four rotation axes (A1, A2, A3, A4) and is configured to be pivoted or fixed to the frame (2) to rotate or flex around the fourth rotation axis (A4) of said four rotation axes (A1, A2, A3, A4), wherein a second intermediate element (3) of said intermediate elements (3, 4) comprises an eccentric pin (3) which is pivoted to the swingarm (1) to rotate around a second rotation axis (A2) of said four rotation axes (A1, A2, A3, A4) and is configured to be pivoted to the frame (2) to rotate around a third rotation axis (A3) of said four rotation axes (A1, A2, A3, A4).

2. Suspension according to the previous claim, wherein the distance between the first rotation axis (A1) and the fourth rotation axis (A4) is greater than the distance between the second rotation axis (A2) and the third rotation axis (A3), and/or the distance between the first rotation axis (A1) and the second rotation axis (A2) is greater than the distance between the second rotation axis (A2) and the third rotation axis (A3).

3. Suspension according to one of the previous claims, wherein the swingarm (1) and/or the frame (2) comprise devices suitable for modifying the position of the rotation axes (A1, A2, A3, A4) with respect to the swingarm (1) and/or the frame (2).

4. Suspension according to one of the previous claims, wherein a rocker arm (16) is pivoted to the swingarm (1) and to an adjustment arm (17) configured to be pivoted to the frame (2), wherein the length of the adjustment arm (17) is adjustable.

5. Suspension according to one of the previous claims, wherein the centre of instantaneous rotation (CIR) of the swingarm (1) is arranged on the intersection of a plane passing through the first rotation axis (A1) and the fourth rotation axis (A4) with a plane passing through the second rotation axis (A2) and the third rotation axis (A3).

6. Suspension according to one of the previous claims, wherein the eccentric pin (3) comprises a screw (3a) which passes through a longitudinal cavity of a shaft (3b) and is screwed into a nut (3g) to longitudinally lock one or more first bearings (3c) at the ends of the shaft (3b) to allow a rotation of the shaft (3b) around the third rotation axis (A3), wherein the shaft (3b) comprises one or more eccentric extensions (3d) and one or more second bearings (3e) arranged on the eccentric extensions (3d) to allow a rotation of the shaft (3b) around the second rotation axis (A2).

7. Vehicle comprising one or more wheels (8, 10) configured to support the vehicle on a ground, wherein this vehicle comprises a frame (2) mechanically connected, in a movable manner, to a suspension according to one of the previous claims, wherein this suspension rotatably supports a wheel (8) of said one or more wheels (8, 10) of the vehicle.

8. Vehicle according to the previous claim, which comprises a drive wheel (5) which is configured to rotate around a fifth rotation axis (A5) and is connected by a transmission (9) to a driven wheel (6) configured to rotate said wheel (8) of the vehicle, which is supported by the suspension, around a sixth rotation axis (A6), wherein said four rotation axes (A1, A2, A3, A4) of the articulated quadrilateral, said fifth rotation axis (A5) and said sixth rotation axis (A6) are substantially parallel to each other.

9. Vehicle according to the previous claim, wherein the four rotation axes (A1, A2, A3, A4) of the articulated quadrilateral are arranged in a space comprised between two reference planes (PR) substantially parallel to each other, where the fifth rotation axis (A5) lies on the first of these two planes (PR) and the sixth rotation axis (A6) lies on the second of these two planes (PR).

10. Vehicle according to the previous claim, wherein, during the movement of the swingarm (1) of the suspension with respect to the frame (2), the sixth rotation axis (A6) moves along a trajectory (AC) substantially circular arc-shaped around a centre of rotation (CRV) which is located at the limit or outside of said space between the two reference planes (PR).

11. Vehicle according to claim 9 or 10, wherein, in a given position of the swingarm (1) of the suspension with respect to the frame (2), said second rotation axis (A2), said third rotation axis (A3), said fifth rotation axis (A5) and said sixth rotation axis (A6) are substantially aligned on a same plane.

12. Vehicle according to one of claims 8 to 11, wherein the drive wheel (5) is driven by an engine (7) incorporating one or more portions of the frame (2).

13. Method of making a suspension of a vehicle comprising one or more wheels (8, 10) configured to support the vehicle on a ground, wherein the vehicle also comprises a frame (2) mechanically connected, in a movable manner, to a suspension rotatably supporting a wheel (8) of said one or more wheels (8, 10) of the vehicle, wherein the vehicle also comprises a drive wheel (5) which is configured to rotate around a fifth rotation axis (A5) and is connected by means of a transmission (9) to a driven wheel (6) configured to rotate said wheel (8) supported by the suspension around a sixth rotation axis (A6), wherein the suspension comprises a swingarm (1) configured to rotatably support said wheel (8) of the vehicle and mechanically connected, in a movable manner, to one or more portions of a frame (2) of a vehicle by means of intermediate elements (3, 4) configured to rotate or flex with respect to the swingarm (1) and the frame (2), so that the swingarm (1), the frame (2) and the intermediate elements (3, 4) form an articulated quadrilateral configured to rotate or flex around at least four rotation axes (A1, A2, A3, A4) substantially parallel to each other and substantially parallel to said fifth rotation axis (A5) and said sixth rotation axis (A6), **characterised in that** it comprises:
a) determining a desired anti-squat (AS') value for the suspension, which should remain essentially constant throughout the entire suspension travel;
b) identifying an anti-squat axis (EH) that corresponds to said desired anti-squat value (AS');
c) finding a neutral suspension position in the suspension travel;
d) arranging, in said neutral position of the suspension, said fifth rotation axis (A5) on a positioning axis (AP) substantially parallel to said anti-squat axis (EH), at a given distance from it;
e) determining, in said neutral position of the suspension, a reference line (LR) passing through the sixth rotation axis (A6) and the fifth rotation axis (A5);
f) determining an ideal point (P) on the reference line (LR) around which the sixth rotation axis (A6) must rotate to maintain the desired anti-squat value (AS') substantially constant throughout the entire suspension travel;
g) arranging the reciprocal position of the four rotation axes (A1, A2, A3, A4) of said articulated quadrilateral in positions such that the swingarm (1) rotates around a virtual centre of rotation (CRV) which substantially corresponds to said ideal point (P).

14. Method according to the previous claim, wherein said anti-squat axis (EH) is the axis that passes through the contact point (E) of the wheel (8) supported by the suspension with the ground and through a point (H) placed vertically from the contact point (F) of a further wheel (10) of the vehicle on the ground, at a level from the ground equal to the level from the ground of the centre of gravity (CG) of the vehicle multiplied by the desired anti-squat value (AS').

15. Method according to claim 13 or 14, wherein said suspension is a suspension according to one of claims 1 to 6 and/or said vehicle is a vehicle according to one of claims 7 to 12.
